(19)

Europäisches
Patentamt
European
Patent Office
Office européen
des brevets

(11) **EP 2 282 467 A2**

(12) **EUROPEAN PATENT APPLICATION**

(43) Date of publication:
**09.02.2011 Bulletin 2011/06**

(51) Int Cl.:
***H04L 27/26*** (2006.01)

(21) Application number: **10171884.9**

(22) Date of filing: **04.08.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **04.08.2009 JP 2009181404**

(71) Applicant: **Panasonic Corporation
Kadoma-shi
Osaka 571-8501 (JP)**

(72) Inventors:
• **Yamamoto, Kohsuke
Osaka-shi Osaka 540-6207 (JP)**
• **Matsumura, Yoshinobu
Osaka-shi Osaka 540-6207 (JP)**

(74) Representative: **Grünecker, Kinkeldey,
Stockmair & Schwanhäusser
Anwaltssozietät
Leopoldstrasse 4
80802 München (DE)**

(54) **OFDM receiver with differential demodulation**

(57) The present invention is an OFDM receiver that receives an OFDM modulated signal including a specific symbol (which has a first set of active carriers and a second set of active carriers that indicate identical information). This OFDM receiver combines differential demodulation results for both sets of active carriers, weighting the differential demodulation results in order to prioritize a smaller carrier frequency difference over a larger carrier frequency difference in the sets of active carriers.

FIG. 1

1

EP 2 282 467 A2

**Description**

**Technical Field**

The present invention relates to a receiver for OFDM (Orthogonal Frequency Division Multiplexing) modulation used, for example, in digital terrestrial broadcasting and in particular to improving demodulation of preamble symbols.

**Background Art**

OFDM modulation is a multicarrier digital transmission system used in digital broadcasting and in wireless communications such as cellular telephones, wireless LANs, etc.

In recent years, a broadcasting system that includes preamble symbols has been standardized in the field of digital television broadcasting.

For example, in the OFDM transmitter corresponding to the European next-generation digital terrestrial broadcasting system (DVB-T2; Digital Video Broadcasting - Terrestrial version 2), preamble symbols are generated, inserted at the beginning of a T2 frame, and transmitted. Note that preamble symbols include both P1 and P2 symbols, but in the following description, a preamble symbol refers to a P1 symbol unless otherwise specified.

This preamble symbol includes an S1 field, indicating the preamble format, and an S2 field, indicating complementary information (see, for example, Non Patent Literature 1).

The S1 field indicates, for example, whether the preamble format is Single Input, Single Output (SISO) or Multiple Input, Single Output (MISO).

On the other hand, the S2 field indicates, for example, the FFT size and guard interval of the symbols in the T2-frame.

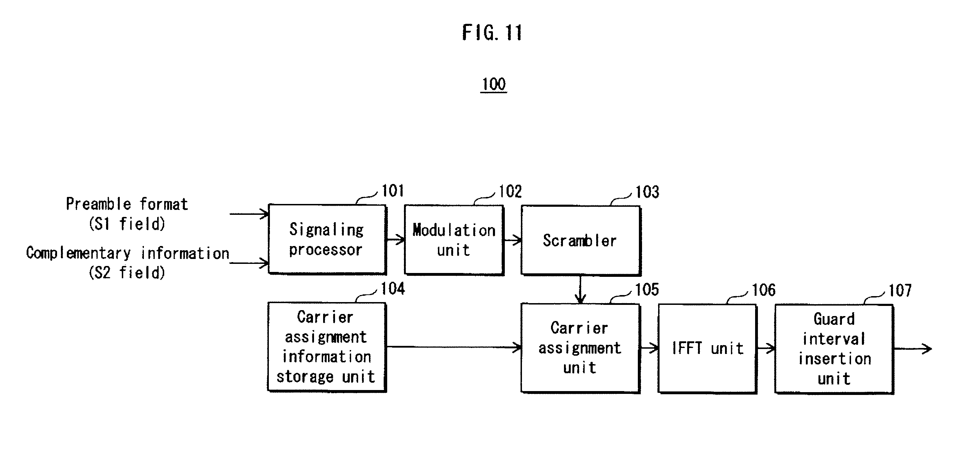

Fig. 11 is a block diagram showing a preamble symbol modulation unit provided in an OFDM transmitter that supports the DVB-T2 system.

As shown in Fig. 11, the preamble symbol modulation unit 100 comprises a signaling processor 101, modulation unit 102, scrambler 103, carrier assignment information storage unit 104, carrier assignment unit 105, IFFT unit 106, and guard interval insertion unit 107.

The signaling processor 101 expands an input S1 field and input S2 field, providing these fields with redundancy.

The modulation unit 102 performs Differential Binary Phase Shift Keying (DBPSK) modulation on adjacent signals in the carrier direction for a bit data sequence output by the signaling processor 101.

The scrambler 103 scrambles the modulated signal output by the modulation unit 102.

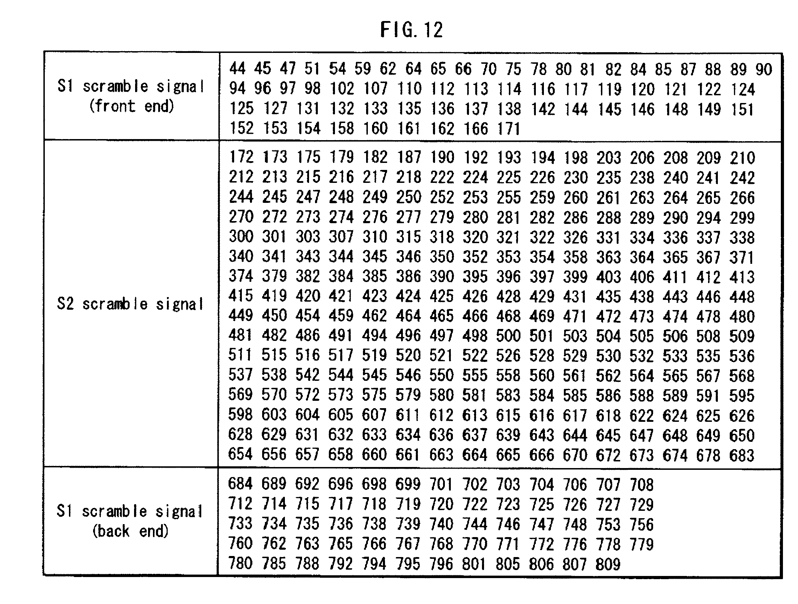

The carrier assignment information storage unit 104 stores carrier assignment information (see Fig. 12).

The carrier assignment unit 105 discretely assigns the signal output by the scrambler 103 in the carrier direction in accordance with the carrier assignment information recorded in the carrier assignment information storage unit 104.

The IFFT unit 106 performs an Inverse Fast Fourier Transform (IFFT) on the signal output from the carrier assignment unit 105.

The guard interval insertion unit 107 inserts guard intervals in the symbol direction before and after the results from the IFFT unit 106.

The following is a further explanation of carrier assignment.

Fig. 12 shows carrier assignment information stored in the carrier assignment information storage unit 104.

In Fig. 12, carriers with numbers 44, 45, 47, 51, etc. are active carriers used for data transmission. On the other hand, carriers with numbers 46, 48, 49, 50, etc., not shown in Fig. 12, are unused carriers that are not used for data transmission. Active carriers are thus assigned discretely in the carrier direction.

Among the active carriers, the set of active carriers (44, 45, 47, ..., 171) included in a low frequency range (referred to as the "front end") is used for transmitting the S1 field, which is 64 bits of information.

The set of active carriers (172, 173, 175, ..., 683) included in a middle frequency range is used for transmitting the S2 field, which is 256 bits of information.

The set of active carriers (684, 689, 692, ..., 809) included in a high frequency range (referred to as the "back end") is used for transmitting the S1 field, which is 64 bits of information, in the same way as the low frequency range.

The carrier assignment unit 105 assigns a signal scrambled by the scrambler 103 to carriers according to such carrier assignment information.

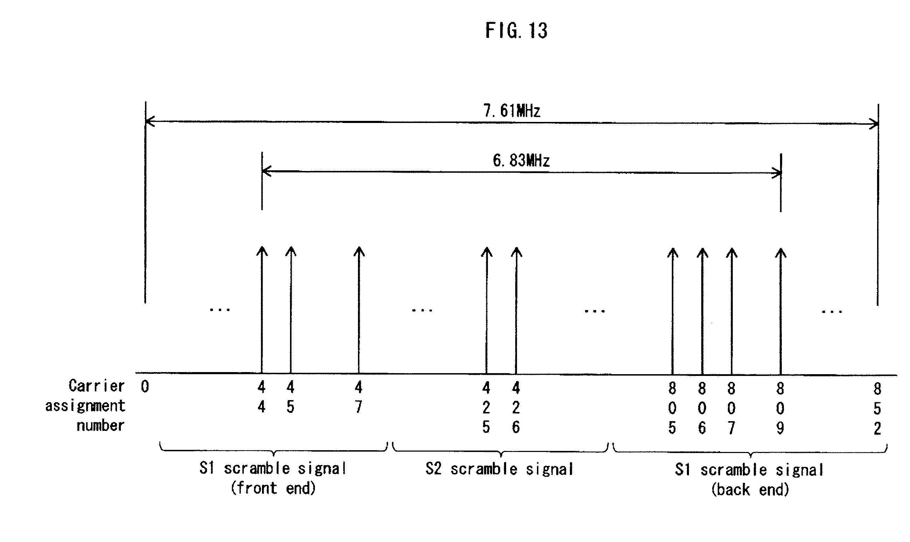

Fig. 13 shows carrier assignment of preamble symbols on the frequency axis in a DVB-T2 system. According to the numbers shown in Fig. 12, the carrier assignment unit 105 assigns the S1 scramble signal and S2 scramble signal discretely on frequency axes as shown in Fig. 13.

Citation List

    Non Patent Literature

Non Patent Literature 1

Frame structure channel coding and modulation for a second generation digital terrestrial television broadcasting system (DVB-T2) DVB Document A122r1

Non Patent Literature 2

Implementation guidelines for a second generation digital terrestrial television broadcasting system (DVB-T2) DVB Document A 133

**Summary of Invention**

Technical Problem

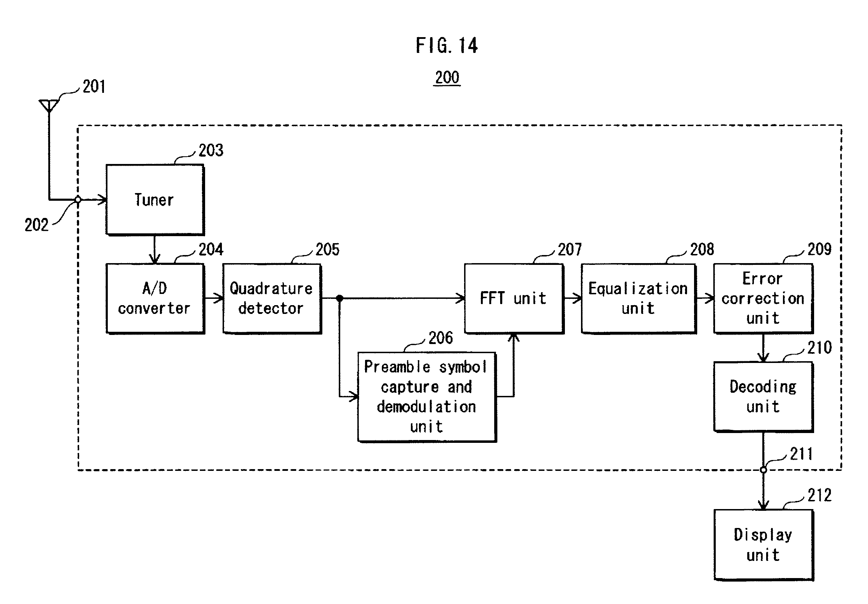

In the above DVB-T2 system, although the structure at the transmitting end is recited, the structure at the receiving end is not recited in much detail. Fig. 14 shows an OFDM receiver conceived by the inventors of the present invention.

The OFDM receiver 200 shown in Fig. 14 comprises an antenna unit 201, connector 202, tuner 203, A/D converter 204, quadrature detector 205, preamble symbol capture and demodulation unit 206, FFT unit 207, equalization unit 208, error correction unit 209, decoding unit 210, connector 211, and display unit 212.

The antenna unit 201 receives an OFDM modulated signal.

The connector 202 connects the antenna unit 201 and the OFDM receiver 200.

The tuner 203 extracts a signal at a desired frequency band from the OFDM modulated signal received from the connector 202.

The A/D converter 204 converts the OFDM modulated signal in the Radio Frequency (RF) band output by the tuner 203 from analog to digital.

Based on a local oscillator frequency, the quadrature detector 205 performs quadrature detection on the OFDM modulated signal that is in an intermediate frequency band output by the A/D converter 204, converting the OFDM modulated signal into a desired fundamental frequency band.

The preamble symbol capture and demodulation unit 206 detects synchronous positions of preamble symbols in an OFDM modulated signal output by the quadrature detector 205 and demodulates information included in the preamble symbol (S1 field and S2 field). This demodulation yields the frame synchronous position, frame structure, etc.

The FFT unit 207 performs FFT on the OFDM modulated signal output by the quadrature detector 205 based on the frame synchronous position information output by the preamble symbol capture and demodulation unit 206.

The equalization unit 208 equalizes the results output by the FFT unit 207 based on an estimation of channel characteristics.

The error correction unit 209 performs error correction on the equalized signal output by the equalization unit 208.

The decoding unit 210 decodes data that is an error corrected signal output by the error correction unit 209 and coded with, for example, the H.264 system.

The connector 211 outputs the decoded signal output by the decoding unit 210 to an external device.

The display unit 212 displays or plays back video/audio data based on the signal output by the connector 211.

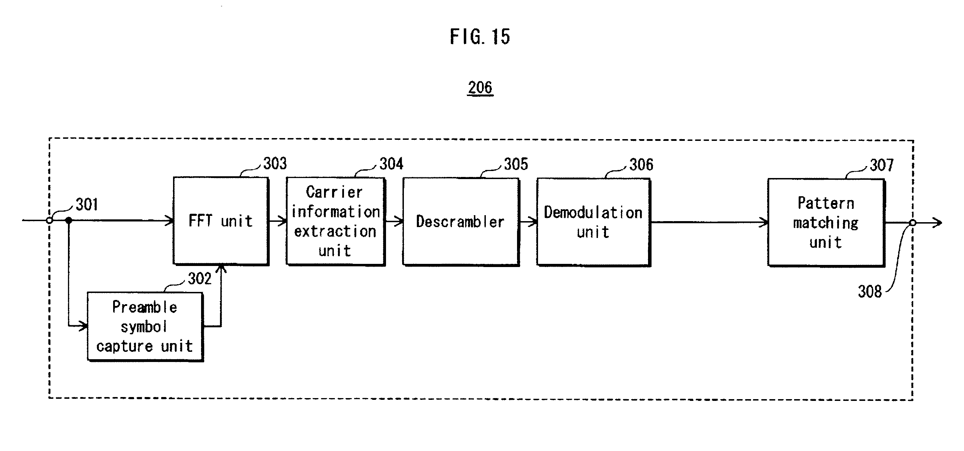

The following further describes the preamble symbol capture and demodulation unit 206 with reference to Fig. 15.

Fig. 15 is a block diagram of the preamble symbol capture and demodulation unit 206.

The preamble symbol capture and demodulation unit 206 shown in Fig. 15 comprises a connector 301, preamble symbol capture unit 302, FFT unit 303, carrier information extraction unit 304, descrambler 305, demodulation unit 306, pattern matching unit 307, and connector 308.

The connector 301 connects the quadrature detector 205 and the preamble symbol capture and demodulation unit 206.

The preamble symbol capture unit 302 detects the synchronous position of the preamble symbol from the OFDM modulated signal output by the quadrature detector 205 and captures the preamble symbol without guard intervals.

The FFT unit 303 performs FFT on the preamble symbols based on the synchronous position information of the preamble symbol output by the preamble symbol capture unit 302.

The carrier information extraction unit 304 stores a table indicating information, corresponding to the carrier assignment information in Fig. 12, on active carriers to be extracted. The carrier information extraction unit 304 also refers to the above table to extract carriers, from the FFT results output by the FFT unit 303, that correspond to the results of scrambling of the S1 field and the results of scrambling of the S2 field.

The descrambler 305 descrambles the carrier signal corresponding to the results of scrambling of the S1 field and the carrier signal corresponding to the results of scrambling of the S2 field that are output by the carrier information extraction unit 304.

The demodulation unit 306 performs differential demodulation in the carrier direction on the results of descrambling output by the descrambler 305.

The pattern matching unit 307 aligns and determines the S1 field and S2 field for the results of demodulation from the demodulation unit 306.

The connector 308 connects the pattern matching unit 307 with the next block.

As described with reference to Figs. 12 and 13, the S1 field exists in two locations: the set of active carriers at the front end (44, 45, 47, ..., 171), and the set of active carriers at the back end (684, 689, 692, ..., 809).

Accordingly, when the preamble symbol is captured and demodulated, it is conceivable to differentially demodulate these two S1 fields separately, add/combine the differential demodulation results evenly, perform a hard decision, and output the results.

However, even though the information transmitted, for example, at the front end using active carrier number 45 and active carrier number 47 is the same as the information transmitted at the back end using active carrier number 689 and active carrier number 692, there is a frequency difference of two carrier numbers at the front end (= 47-45) and a frequency difference of three carrier numbers at the back end (= 692-689). Hereinafter, the frequency difference between such adjacent active carriers is referred to as the "carrier interval".

This sort of difference in carrier intervals affects the amount of phase error of a signal.

That is, as the difference in the carrier interval during differential demodulation increases, the difference between the channel characteristics (frequency characteristics) of the earlier active carrier (for example, 689) and the later active carrier (for example, 692) greatly increases, which increases the amount of phase error of the signal.

If the carrier interval at the front end is two and the carrier interval at the back end is three, as in the above example, there is a high probability that the demodulation results at the back end, which has a larger carrier interval, will have a larger amount of phase error.

Using the demodulation results for the larger amount of phase error directly as the final differential demodulation results, however, may decrease reliability of the demodulation results.

This sort of problem occurs not only in an OFDM receiver that receives preamble symbols, but also in an OFDM receiver that receives any symbol having a similar structure.

It is an object of the present invention to solve these problems by improving demodulation in an OFDM receiver that receives an OFDM modulated signal that includes a specific symbol whose active carriers are assigned discretely in the carrier direction.

Solution to Problem

An OFDM receiver according to the present invention receives an OFDM modulated signal including a specific symbol and comprises a demodulation unit and a combination unit, wherein the specific symbol has a plurality of active carriers assigned discretely in a carrier direction, a first piece of information, which is transmitted using a first set of the active carriers included in a low carrier frequency range, is identical to a second piece of information, which is transmitted using a second set of the active carriers included in a high carrier frequency range, the demodulation unit performs differential demodulation in the carrier direction on the first set of active carriers and the second set of active carriers, and the combination unit weights first differential demodulation results for the first set of active carriers and second differential demodulation results for the second set of active carriers in accordance with (i) a first carrier frequency difference, which is a difference between a $(k-1)^{th}$ active carrier and a $k^{th}$ active carrier in the first set of active carriers, k being an integer two or greater, and (ii) a second carrier frequency difference, which is a difference between a $(k-1)^{th}$ active carrier and a $k^{th}$ active carrier in the second set of active carriers, so that differential demodulation results corresponding to a smaller carrier frequency difference are prioritized over differential demodulation results corresponding to a larger carrier frequency difference, and combines the first differential demodulation results with the second differential demodulation results.

Advantageous Effects of Invention

The OFDM receiver according to the present invention comprises a combination unit that combines differential demodulation results for the first and second set of active carriers, prioritizing the differential demodulation results corresponding to a smaller carrier frequency difference over the differential demodulation results corresponding to a larger carrier frequency difference. The results with a smaller amount of phase error can thus particularly be prioritized, thereby improving demodulation.

**Brief Description of Drawings**

Fig. 1 is a block diagram of an OFDM receiver in the DVB-T2 system according to the Embodiment;
Fig. 2 is a block diagram of a preamble symbol capture and demodulation unit;
Fig. 3 is a data configuration diagram of carrier assignment information stored in a database storage unit;
Fig. 4 is a data configuration diagram of carrier assignment information stored in the database storage unit;
Fig. 5 is a block diagram of a weighting calculation combination unit;
Fig. 6 is a data configuration diagram of carrier interval information stored in the database storage unit;
Fig. 7 is a data configuration diagram showing an example of weighting coefficients calculated by a calculation/combination unit;
Fig. 8 is a data schematic diagram showing an example of carrier power for a preamble symbol;
Fig. 9 is a data schematic diagram showing an example of a frequency spectrum for a preamble symbol;
Fig. 10 is a data configuration diagram showing an example of weighting coefficients calculated by a calculation/combination unit;
Fig. 11 is a block diagram of a preamble symbol modulation unit provided in an OFDM transmitter that supports the DVB-T2 system;
Fig. 12 shows carrier assignment information stored in the carrier assignment information storage unit 104;
Fig. 13 is a carrier assignment diagram of preamble symbols on the frequency axis in the DVB-T2 system;
Fig. 14 is a block diagram of an OFDM receiver based on DVB-T2 system standards; and
Fig. 15 is a block diagram of the preamble symbol capture and demodulation unit.

## Description of Embodiments

The following is a description of an embodiment of the present invention with reference to the drawings.

Embodiment

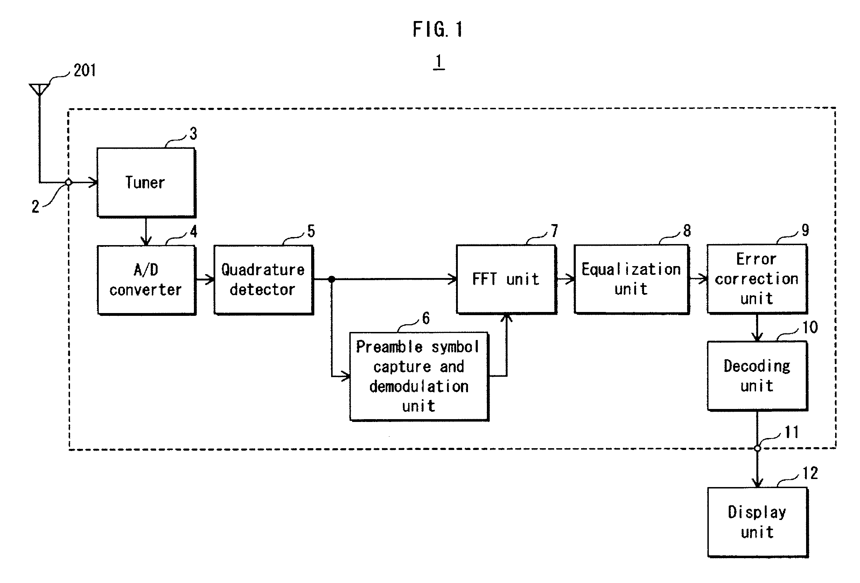

Fig. 1 shows a block diagram of an OFDM receiver in the DVB-T2 broadcasting system.
The OFDM receiver 1 shown in Fig. 1 comprises a connector 2, tuner 3, A/D converter 4, quadrature detector 5, preamble symbol capture and demodulation unit 6, FFT unit 7, equalization unit 8, error correction unit 9, decoding unit 10, connector 11, and display unit 12.
The connector 2 connects an antenna unit 201, which receives an OFDM modulated signal, with the OFDM receiver 1.
The tuner 3 extracts a signal at a desired frequency band from the OFDM modulated signal received from the connector 2.
The A/D converter 4 converts the OFDM modulated signal output by the tuner 3 from analog to digital.
To acquire the phase of the In-phase channel (I channel) and the quadrature channel (Q channel), the quadrature detector 5 converts the OFDM modulated signal in an intermediate frequency band output by the A/D converter 4 into a desired fundamental frequency band based on a local oscillator frequency.
The preamble symbol capture and demodulation unit 6 detects synchronous positions of preamble symbols in an OFDM modulated signal output by the quadrature detector 5 and demodulates information included in the preamble symbol (S1 field and S2 field). This demodulation yields the frame synchronous position.
The FFT unit 7 performs an FFT on the OFDM modulated signal output by the quadrature detector 5 based on the S2 field (which shows the FFT size) and frame synchronous position information (which shows the FFT interval) output by the preamble symbol capture and demodulation unit 6.
The equalization unit 8 equalizes the results output by the FFT unit 7 based on an estimation of channel characteristics.
Note that a common method can be used to estimate the channel characteristics. For example, a pilot signal with known amplitude and phase may be used by the OFDM receiver 1.
The error correction unit 9 performs error correction on the equalized signal output by the equalization unit 8.
The decoding unit 10 decodes data that is an error corrected signal output by the error correction unit 9 and coded with, for example, the H.264 system.
The connector 11 outputs the decoded signal output by the decoding unit 10 to the display unit 12, which is an external device.
The display unit 12 displays or plays back video/audio data based on the signal output by the connector 11.
The preamble symbol capture and demodulation unit 6 in the OFDM receiver I particularly differs from the OFDM receiver 200 (Fig. 14), and thus the preamble symbol capture and demodulation unit 6 is described in detail.

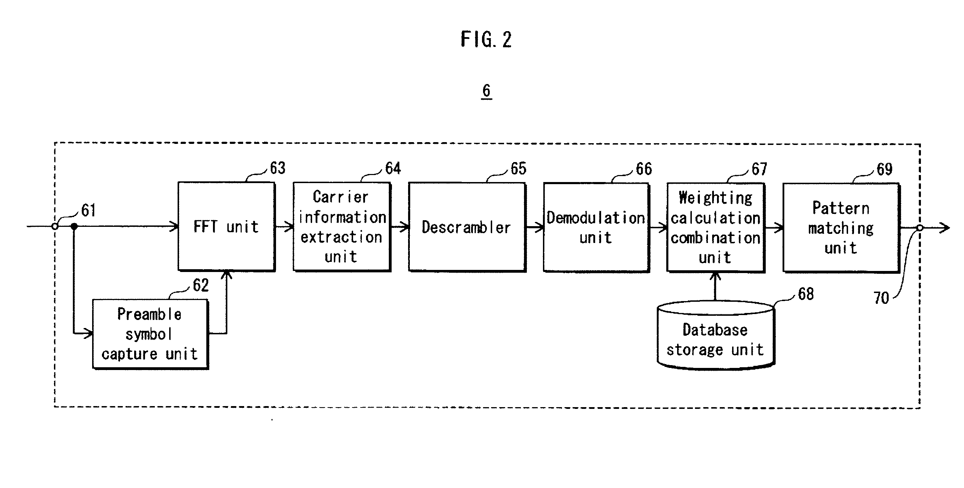

Fig. 2 is a block diagram of the preamble symbol capture and demodulation unit in the OFDM receiver.
In Fig. 2, the preamble symbol capture and demodulation unit 6 comprises a connector 61, preamble symbol capture unit 62, FFT unit 63, carrier information extraction unit 64, descrambler 65, demodulation unit 66, weighting calculation combination unit 67, database storage unit 68, pattern matching unit 69, and connector 70.

The connector 61 connects the previous block, i.e. the quadrature detector 5, and the preamble symbol capture and demodulation unit 6.

The preamble symbol capture unit 62 detects a preamble symbol from the received OFDM modulated signal and outputs the synchronous positions of the preamble symbol.

Specifically, as described in Non-Patent Literature 2, a detected preamble symbol is composed of three parts: a first part, C, main part, A, and last part, B. The main part, A, is a 1K OFDM symbol.

The first part, C, is a frequency-shifted copy of the first 542 samples of A, and the last part, B, is a frequency-shifted copy of the last 482 samples of A.

The preamble symbol capture unit 62 removes the first part, C, and the last part, B, as guard intervals, thus detecting A.

Based on information on the synchronous positions of the preamble symbol in A output by the preamble symbol capture unit 62, the FFT unit 63 performs FFT on the preamble symbol and outputs the results of FFT to the carrier information extraction unit 64.

Based on the FFT results output by the FFT unit 63, the carrier information extraction unit 64 extracts the carriers respectively corresponding to the results of scrambling of the S1 field and the results of scrambling of the S2 field discretely assigned at the time of modulation. The carrier information extraction unit 64 then outputs the carriers to the descrambler 65.

The descrambler 65 descrambles the carrier signal corresponding to the results of scrambling of the S1 field and the carrier signal corresponding to the results of scrambling of the S2 field that are output by the carrier information extraction unit 64, performs descrambling, and outputs the results of descrambling to the demodulation unit 66.

The demodulation unit 66 performs differential demodulation on the results of descrambling output by the descrambler 65, outputting the differential demodulation results to the weighting calculation combination unit 67.
The demodulation unit 66 performs standard differential demodulation.
That is, a signal (indicating one bit of information) mapped on the I/Q plane is transmitted via each active carrier in the set of active carriers.
The demodulation unit 66 performs differential demodulation in sequence on adjacent active carriers in the set of active carriers to extract, in sequence, one bit of information.

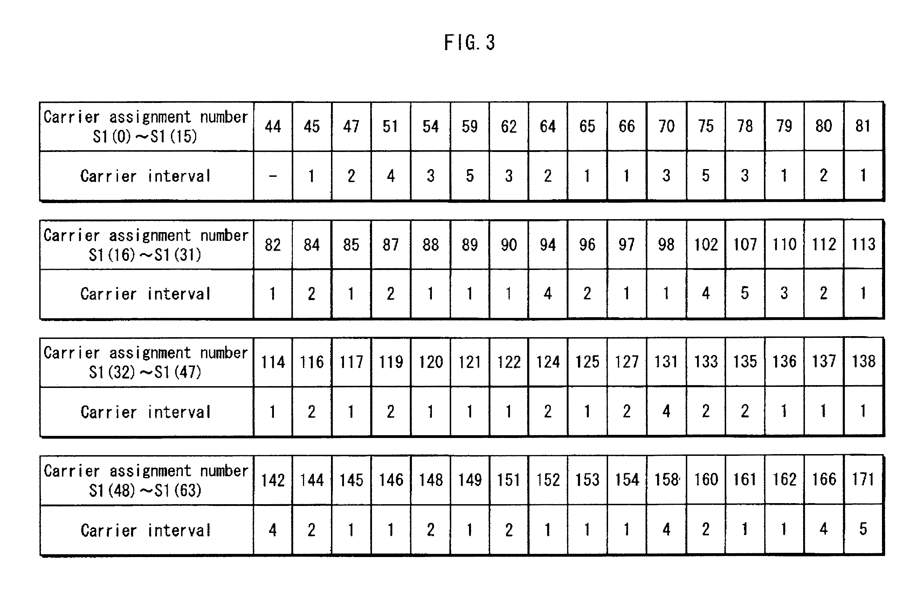

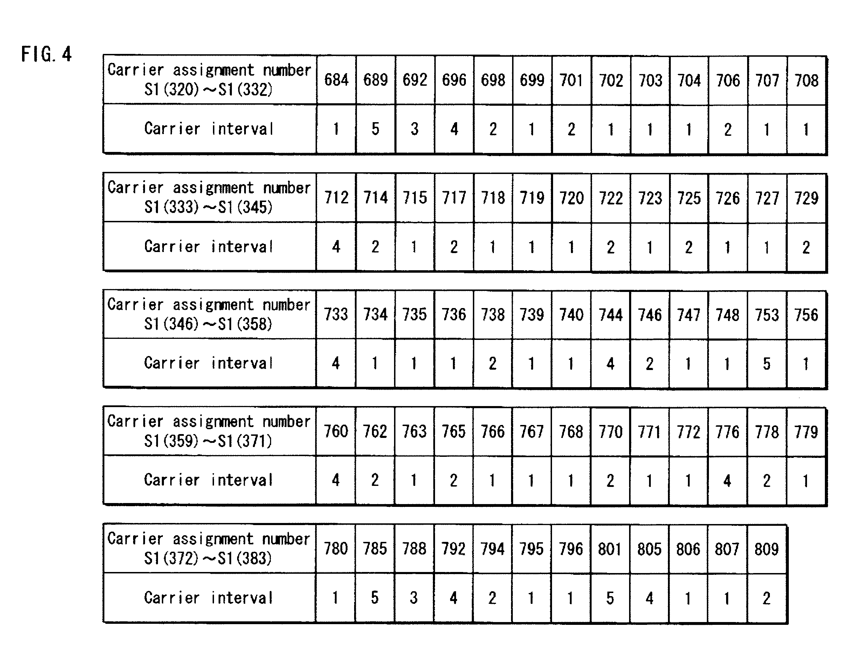

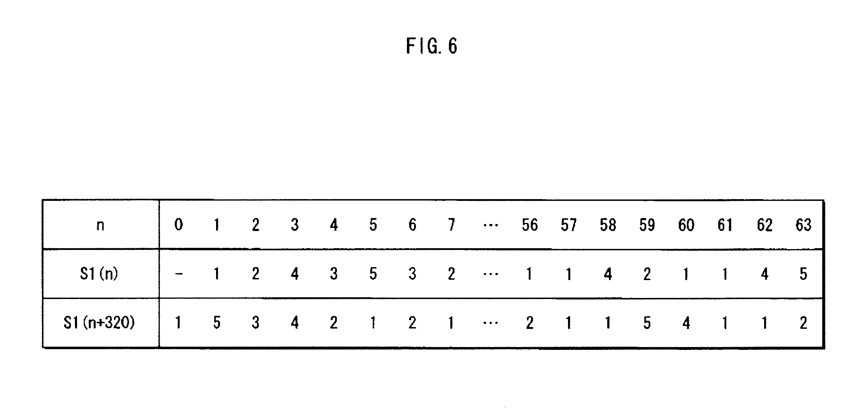

The database storage unit 68 stores information recording numbers to which active carriers are assigned in the preamble symbol (i.e. carrier assignment information; see Figs. 3 and 4), information indicating carrier intervals between the active carriers (i.e. carrier interval information; see Fig. 6), etc.

Based on the differential demodulation results output by the demodulation unit 66 and on the carrier assignment information stored in the database storage unit 68 for the preamble symbol, the weighting calculation combination unit 67 calculates weighting coefficients. Based on the weighting coefficients, the weighting calculation combination unit 67 then calculates a combined S1 field from two S1 fields and outputs the calculated S1 field and the S2 field to the pattern matching unit 69.

The pattern matching unit 69 includes an S1 table that lists values corresponding in order to the 64-bit sequence of the S1 field.

The pattern matching unit 69 refers to the S1 table to determine the values indicated by the S1 field output by the weighting calculation combination unit 67. The pattern matching unit 69 then outputs the results.

The pattern matching unit 69 also includes an S2 table that lists values corresponding in order to the 256-bit sequence of the S2 field.

The pattern matching unit 69 refers to the S2 table to determine the values indicated by the S2 field output by the weighting calculation combination unit 67. The pattern matching unit 69 then outputs the results.

Note that the pattern matching unit 69 was described as processing the S1 field and S2 field individually, but these fields may both be processed together.

The connector 70 connects the preamble symbol capture and demodulation unit 6 with the subsequent block, i.e. the FFT unit 7.

Next, the carrier assignment information is described with reference to Figs. 3 and 4.

Figs. 3 and 4 are both data configuration diagrams of carrier assignment information, which indicates numbers to which active carriers are assigned in the preamble symbol.

In particular, Fig. 3 shows carrier assignment information for descrambled signals S1(0)-S1(63) in the S1 field located at the front end of a preamble symbol, and Fig. 4 shows carrier assignment information for descrambled signals S1(320)-S1(383) in the S1 field located at the back end of a preamble symbol.

For example, from among the descrambled signals in the S1 field, consider S1(1) to S1(6) shown in Fig. 3. For S1(1) (number 45), the carrier interval is 1, which is the smallest carrier interval. For S1(2) (number 47), the carrier interval is 2 (47-45). For S1(3) (number 51), the carrier interval is 4 (51-47). For S1(4) (number 54), the carrier interval is 3 (54-51). For S1(5) (number 59), the carrier interval is 5 (59-54), the largest carrier interval. For S1(6) (number 62), the carrier interval is 3 (62-59).

Similarly, from among the descrambled signals in the S1 field, consider for example S1(321) to S1(326) shown in Fig. 4. For S1(321) (number 689), the carrier interval is 5 (689-684), the largest carrier interval. For S1(322) (number 692), the carrier interval is 3 (692-689). For S1(323) (number 696), the carrier interval is 4 (696-692). For S1(324) (number 698), the carrier interval is 2 (698-696), and for S1(325) (number 699), the carrier interval is 1 (699-698), the smallest carrier interval.

Information that thus associates carrier assignment for descrambled signals of two S1 fields with carrier intervals between active carriers is called "carrier interval information". This carrier interval information is described below with reference to Figs. 6.

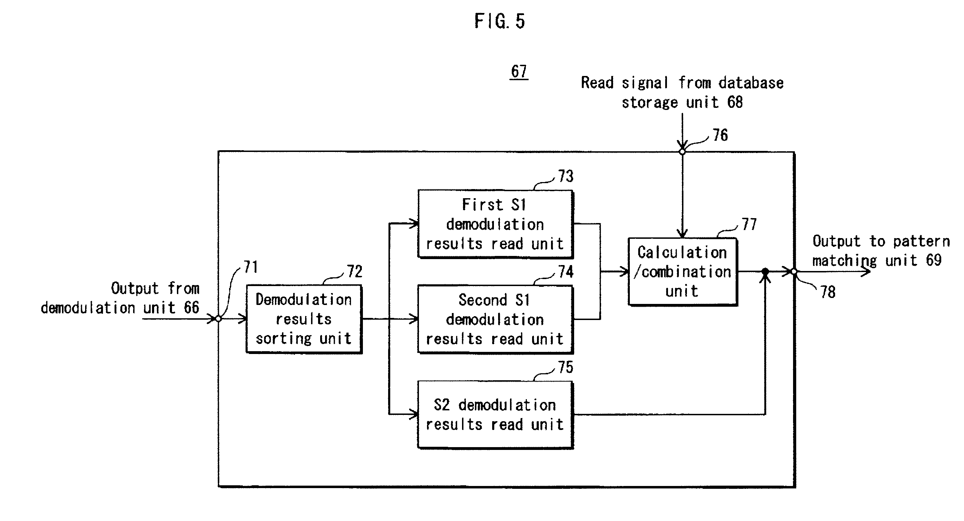

The following is a description of Fig. 5, which is a block diagram for the weighting calculation combination unit 67. The weighting calculation combination unit 67 includes a demodulation results input terminal 71 for inputting the output of the demodulation unit 66, a demodulation results sorting unit 72, a first S1 demodulation results read unit 73, a second S1 demodulation results read unit 74, an S2 demodulation results read unit 75, an input terminal 76 for information from the database storage unit 68, a calculation/combination unit 77, and an output terminal 78 for outputting to the pattern matching unit 69.

The demodulation results sorting unit 72 sorts the differential demodulation calculation results input into the demodulation results input terminal 71 into demodulation results for the S1 field and demodulation results for the S2 field.

The first S1 demodulation results read unit 73 reads demodulation results S1(0)-S1(63) located at the front end from among the demodulation results for the S1 field as sorted by the demodulation results sorting unit 72, outputting these results to the calculation/combination unit 77.

The second S1 demodulation results read unit 74 reads demodulation results S1(320)-S1(383) located at the back end from among the demodulation results for the S1 field as sorted by the demodulation results sorting unit 72, outputting these results to the calculation/combination unit 77.

The calculation/combination unit 77 refers to carrier interval information (see Fig. 6) input from the input terminal 76 of the database storage unit 68 to calculate weighting coefficients for each of the demodulation results for two S1 fields input from the first S1 demodulation results read unit 73 and the second S1 demodulation results read unit 74.

The calculation/combination unit 77 then calculates/combines the weighting coefficients for two separate S1 differential demodulation results and performs hard decision processing.

After combination, the calculation/combination unit 77 outputs the results of combination (demodulation results for S1 field) to the output terminal 78 of the pattern matching unit 69.

Next, the carrier interval information stored by the database storage unit 68 is described with reference to Fig. 6.

As shown in Fig. 6, the carrier interval information includes carrier intervals corresponding to demodulation results S1(n) for an S1 field input from the first S1 demodulation results read unit 73 and carrier intervals corresponding to demodulation results S1(n + 320) for an S1 field input from the second S1 demodulation results read unit 74.

For example, if n = 1, the carrier interval for S1(1) is 1, and the carrier interval for S1(321) is 5. In this case, the carrier interval for S1(321) is larger (wider) than the carrier interval for S1(1).

The front end S1(1) shows information on how the demodulation unit 66 has differentially demodulated, in the carrier direction, the first active carrier (number 44) and the second active carrier (number 45) at the front end. The back end S1(321) shows information on how the demodulation unit 66 has differentially demodulated, in the carrier direction, the first active carrier (number 684) and the second active carrier (number 689) at the back end.

In the DVB-T2 standards, S1(1) and S1(321) are to be transmitted as the same information.

However, as described above, the carrier intervals for these pieces of information differ, and the demodulation results for S1(321), which has a large carrier interval of 5, may have a relatively large amount of phase error as compared to the demodulation results for S1(1), which has a small carrier interval of 1.

Therefore, in the present embodiment, the demodulation results with the smaller carrier interval are prioritized as follows.

In the calculation/combination unit 77, a weighting coefficient of 100%, for example, is calculated for the demodulation results of the S1 field with a smaller carrier interval based on the S1(n) carrier interval information and the S1(n + 320) carrier interval information, and a weighting coefficient of 0%, for example, is calculated for the demodulation results of the S1 field with a larger carrier interval. The weighting coefficients for the two separate differential demodulation results are added, the two demodulation results are combined, and hard decision processing is performed.

For example, if n = 1 in Fig. 6, the carrier interval for S1(1) is 1, and the carrier interval for S1(321) is 5. Therefore, the calculation/combination unit 77 adds a weighting coefficient of 100% to the demodulation results for S1(1) and a weighting coefficient of 0% to the demodulation results of S1(321), combines the demodulation results for the two S1 fields with the weighting coefficients added on, performs hard decision processing, and outputs the results.

If n = 4, the carrier interval for S1(4) is 3, and the carrier interval for S1(324) is 2. Therefore, the calculation/combination unit 77 adds a weighting coefficient of 0% to the demodulation results for S1(4) and a weighting coefficient of 100% to the demodulation results of S1(324), combines the two demodulation results with the weighting coefficients added on, performs hard decision processing, and outputs the results.

On the other hand, in the case that the carrier intervals for S1(n) and S1(n + 320) are equal, as for n = 0 or n = 3, the calculation/combination unit 77 adds a weighting coefficient of 50% to the demodulation results of each S1 field, combines the two demodulation results with the weighting coefficients added on, performs hard decision processing, and outputs the results.

For example, if n = 3, the carrier interval for S1(3) is 4, and the carrier interval for S1(323) is also 4. Therefore, the calculation/combination unit 77 adds a weighting coefficient of 50% to the demodulation results for S1(3) and a weighting coefficient of 50% to the demodulation results of S1(323), combines the two demodulation results with the weighting coefficients added on, performs hard decision processing, and outputs the results.

<Exceptional Handling of S1(0)>

In the above description, S1(0), S1(1), S1(2), and S1(3) are handled in the same way, but S1(0) may alternatively be handled as an exception.

That is, unlike other demodulation results for the S1 and S2 field, in the case of the value of the demodulation results S1(0) for the S1 field, the value of S(n - 1), which is the target of differential modulation at the time of modulation, may differ depending on the settings of a preamble modulation unit.

For example, letting the signal before modulation be "a" and the signal after modulation be "y", the differential modulation is defined in Mathematical Formula 1.

Math. 1

$$y(n) = y(n - 1) \times a(n) \quad n = 1, 2, 3, \ldots, N$$

In other words, the differential modulation is performed using the immediately prior differential modulation results.

Accordingly, for S1(0), the value of S1(n - 1) is unclear. When calculating S1(0) and S1(320), therefore, it is possible only to use the value of S1(320), without using the value of S1(0).

<Weighting Based on Difference in Carrier Interval>

In the above description, weighting coefficients of 100%, 50%, or 0% are set based on the size of the carrier intervals. However, by finely setting weighting coefficients based on differences in carrier intervals, it is possible to generate and combine weighting coefficients more precisely.

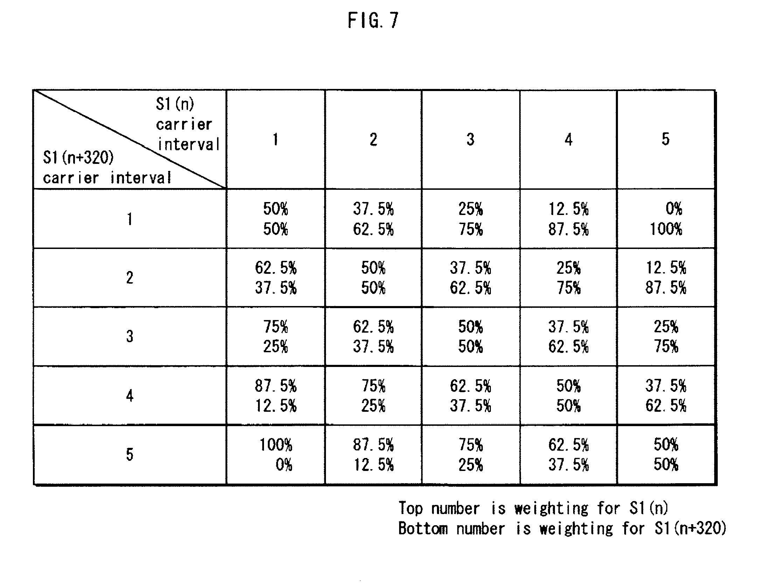

For example, Fig. 7 is a data configuration diagram showing an example of weighting coefficients calculated by a calculation/combination unit. This example shows weighting coefficients calculated by the calculation/combination unit 77, based on carrier interval information stored in the database storage unit 68, for carrier intervals of demodulation results for S1(n) and demodulation results for S1(n + 320). The numbers on top in Fig. 7 are weighting coefficients for S1(n), and the numbers on bottom are weighting coefficients for S1(n + 320).

The largest carrier interval is 5, and the smallest carrier interval is 1. When one carrier interval is 5 and the other carrier interval is 1, yielding a difference between two carrier intervals of 4, a weighting coefficient of 100% is added to the demodulation results for the S1 field with the smaller carrier interval, and a weighting coefficient of 0% is added to the demodulation results for the S1 field with the larger carrier interval. Note that even when weighting of 100% is added to one of the results and 0% to the other, which is similar to alternative selection of one of the results, the two results can still be considered to be combined.

When the difference between two carrier intervals is 3, a weighting coefficient of 87.5% is added to the demodulation results for the S1 field with the smaller carrier interval, and a weighting coefficient of 12.5% is added to the demodulation results for the S1 field with the larger carrier interval. When the difference between two carrier intervals is 2, a weighting coefficient of 75% is added to the demodulation results for the S1 field with the smaller carrier interval, and a weighting coefficient of 25% is added to the demodulation results for the S1 field with the larger carrier interval.

When the difference between two carrier intervals is 1, a weighting coefficient of 62.5% is added to the demodulation results for the S1 field with the smaller carrier interval, and a weighting coefficient of 37.5% is added to the demodulation results for the S1 field with the larger carrier interval. When the difference between two carrier intervals is 0, a weighting coefficient of 50% is added to the demodulation results for each S1 field.

For example, consider a carrier interval of 2 for S1(n) and of 3 for S1(n + 320). In this case, the difference between the carrier interval for S1(n) and for S1(n + 320) is 1, and the carrier interval for S1(n) is smaller. Therefore, a weighting coefficient of 62.5% is calculated for the demodulation results for S1(n) and added on, and a weighting coefficient of 37.5% is calculated for the demodulation results for S1(n + 320) and added on. The two demodulation results with the weighting coefficients added on are then combined, hard determination processing is performed, and the results are output.

When combining demodulation results of two S1 fields, the calculation/combination unit 77 calculates weighting coefficients based on the respective carrier intervals, which makes it possible to combine results after precisely generating weighting coefficients that take the carrier intervals into account.

With this structure, the preamble symbol capture and demodulation unit can use data whose demodulation results are highly reliable and that has a small carrier interval by calculating, based on the preamble symbol information, weighting coefficients that prioritize the smaller carrier interval at the front end and the back end. Accordingly, the preamble symbol with the smallest amount of phase error included in the differential demodulation can be demodulated.

Note that, in the example in Fig. 7, examples of weighting coefficients are 0%, 12.5%, 25%, 37.5%, 50%, 62.5%, 75%, 87.5%, and 100%. These coefficients may be changed, however, in accordance with carrier intervals.

Also, the weighting coefficients calculated by the calculation/combination unit 77 as shown in Fig. 7 may be calculated in advance and stored in the database storage unit 68 as weighting information. By doing so, the processing load for calculation of weighting coefficients by the calculation/combination unit 77 can be reduced.

<Weighting by Carrier Power>

In the example in Fig. 7, when the two carrier intervals corresponding to the front end and the back end are the same, a weighting coefficient of 50% is used for both of the S1 demodulation results for the front end and the back end. However, weighting coefficients can be generated in accordance with the respective carrier powers, thereby making it possible to generate and combine weighting coefficients more precisely.

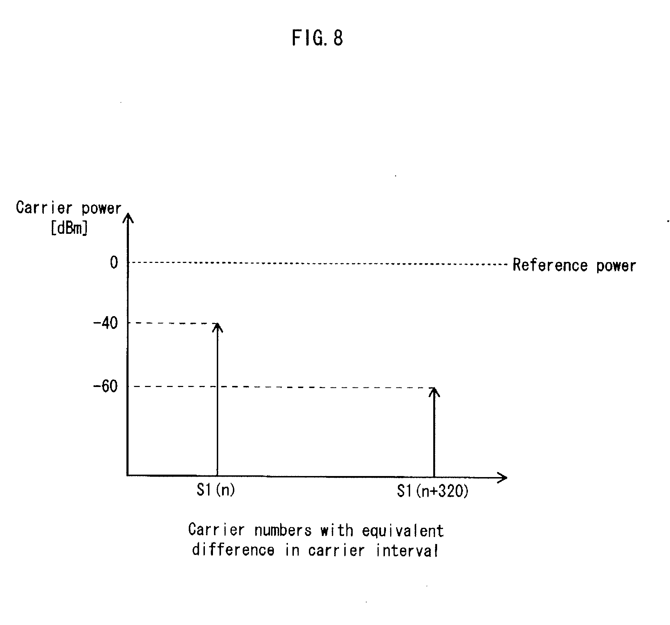

Fig. 8 shows an example of carrier power values when the carrier intervals are the same for S1(n) and S1(n + 320). The carrier power for S1(n) is -40 dBm, and the carrier power for S1(n + 320) is -60 dBm.

With a reference power of 0 dBm, the calculation/combination unit 77 calculates weighting coefficients from carrier power compared to reference power, adding a calculated weighting coefficient of 60% to the demodulation results for S1(n) and a calculated weighting coefficient of 40% to the demodulation results for S1(n + 320). The calculation/combination unit 77 then combines the two demodulation results with the weighting coefficients added on, performs hard decision processing, and outputs the results.

In other words, it is possible to combine results after generating precise weighting coefficients by calculating weighting coefficients from carrier powers for S1(n) and S1(n + 320) when carrier intervals are the same for these carrier numbers.

Note that the reference power is not limited to 0 dBm as above.

For example, a reference power other than of 0 dBm may be set using all of the received OFDM modulated signals.

Alternatively, for example, a reference power other than of 0 dBm may be calculated using the modulated signal of the entire preamble symbol that is received.

Furthermore, while weighting coefficients are described above as being calculated directly using carrier power values, a correspondence table of carrier power values and weighting coefficients may be stored in the database storage unit 68 as weighting information. The values of the weighting coefficients in this weighting information may be set to be changeable to any value.

<Weighting by Combining Carrier Intervals and Carrier Power>

By generating weighting coefficients that take carrier intervals and carrier power upon reception into account, it is possible to generate and combine weighting coefficients more precisely.

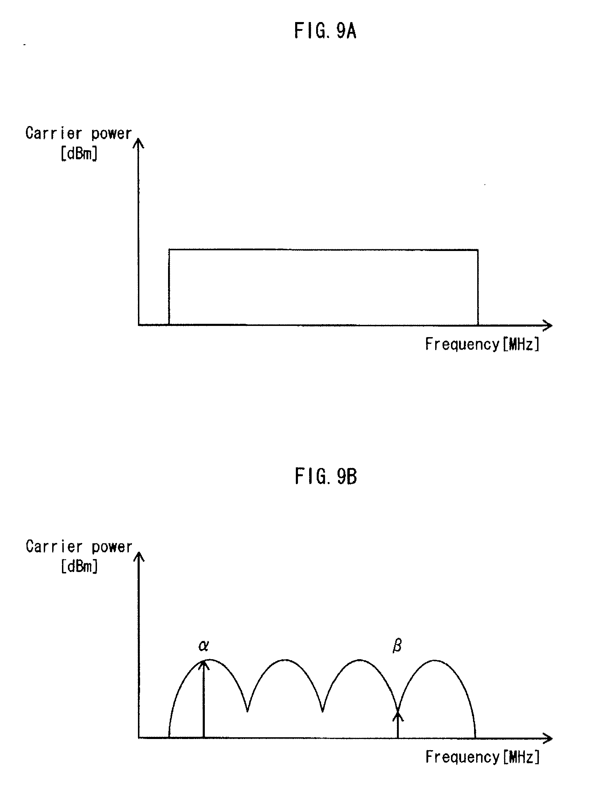

For example, Figs. 9A and 9B show examples of a frequency spectrum for a preamble symbol. The vertical axes indicate carrier power, and the horizontal axes indicate frequency.

In a constant reception environment in which the spectrum does not fluctuate, the carrier power is constant, as shown in Fig. 9A.

However, in a reception environment in which a plurality of delayed waves arrive, the frequency spectrum fluctuates widely, as shown in Fig. 9B.

If the carrier located at $\alpha$ in Fig. 9B is S1(11) and the carrier located at $\beta$ in Fig. 9B is S1(331), then the carrier interval for S1(11) is 5, and the carrier interval for S1(331) is 1.

If carrier power is not taken into consideration, then for example a weighting coefficient of 0% is calculated for the demodulation results for S1(11) and added on, and a weighting coefficient of 100% is calculated for the demodulation results for S1(331) and added on. The two demodulation results with the weighting coefficients added on are then combined, hard decision processing is performed, and the results are output.

In this case, however, the carrier corresponding to S1(331) is influenced by the delayed waves, and due to phase fluctuation, the carrier power value decreases. In other words, the reliability of the carrier information for S1(331) decreases.

To solve this problem, weighting coefficients are calculated in accordance with the carrier power and the carrier interval.

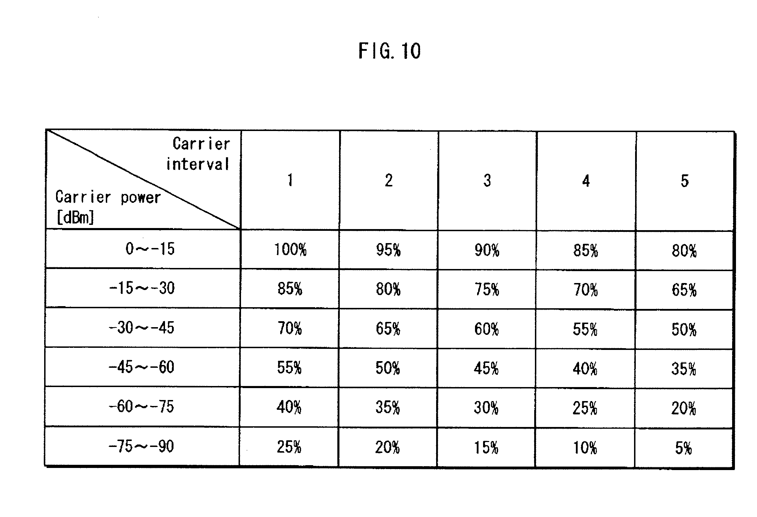

For example, Fig. 10 shows an example of weighting coefficients calculated by the calculation/combination unit 77 for the carrier powers of S1(n) and S1(n + 320) based on carrier interval information stored in the database storage unit 68.

Based on the carrier power and carrier interval of S1(n) and S1(n+320), weighting coefficients between 5% and 100% are calculated. For example, let n = 11, the carrier power of S1(11) be -16 dBm, and the carrier power of S1 (331) be -75 dBm. It is clear from the carrier interval information shown in Fig. 3 that the carrier interval of S1(11) is 5. It is similarly clear that the carrier interval of S1(331) is 1. Accordingly, a weighting coefficient of 65% is calculated for the demodulation results for S1(11) and added on, and a weighting coefficient of 25% is calculated for the demodulation results for S1(331) and added on. The two demodulation results with the weighting coefficients added on are then combined, hard decision processing is performed, and the results are output.

In other words, when combining demodulation results of two S1 fields, the calculation/combination unit 77 calculates weighting coefficients based on both the respective carrier intervals as well as on the carrier powers, which makes it possible to combine results after precisely generating weighting coefficients that take the carrier intervals and the carrier powers into account.

Note that, in Fig. 10, weighting coefficients of 5%, 10%, 15%, 20%, 25%, 30%, 35%, 40%, 45%, 50%, 55%, 60%, 65%, 70%, 75%, 80%, 85%, 90%, 95%, and 100% are indicated as examples, but the values of coefficients may be changed in accordance with carrier interval and carrier power.

Also, in the example in Fig. 10, weighting coefficients are calculated by dividing the carrier power value into six levels of carrier power from 0 dBm to -90 dBm. More finely divided weighting coefficients may be calculated for carrier powers, however, to generate weighting coefficients more precisely.

Also, in the example in Fig. 10, the upper limit of the value of carrier power is 0 dBm, but the upper limit of carrier power may be set using all of the received OFDM modulated signals, with the weighting coefficients then being calculated. Alternatively, the upper limit of carrier power value may be set using the modulated signal of the entire preamble symbol that is received, with the weighting coefficients then being calculated.

Also, the weighting coefficients calculated by the calculation/combination unit 77 as shown in Fig. 10 may be calculated in advance and stored in the database storage unit 68 as weighting information. By doing so, the processing load for calculation of weighting coefficients by the calculation/combination unit 77 can be reduced.

<Supplementary Explanation 1>

While the present embodiment has been described above, the present invention is not limited to this description, but rather may be implemented by a variety of modifications in order to achieve the object of the present invention or a related or associated object thereof. For example, the following modifications are possible.

(1) In the Embodiment, the preamble symbol is described as being DBPSK modulated, but any differential modulation technique may be used. For example, Differential Quadrature Phase Shift Keying (DQPSK) may also be used.
(2) In the Embodiment, hard decision processing is indicated after combination, but the present invention is not limited in this way. For example, soft decision processing may be performed. For DQPSK modulation that includes amplitude information, a soft decision rather than a hard decision can increase reliability.
(3) In the Embodiment, the preamble symbol (PI) in the DVB-T2 standards is provided as an example, but the present invention is not limited in this way.

The method described in the Embodiment can be broadly applied to any OFDM receiver that receives a specific symbol having two pieces of identical information, i.e. a first piece of information transmitted using a first set of active carriers included in a low carrier frequency range and a second piece of information transmitted using a second set of active carriers included in a high carrier frequency range.

The method described in the Embodiment can also be applied, for example, to an OFDM receiver that receives a specific symbol in which different types of pieces of information A→B→C→D→E are assigned in the carrier direction, with A and B or B and D, for example, being identical information.

(4) The OFDM receiver in the Embodiment is typically implemented as a Large Scale Integration (LSI), which is an integrated circuit. Each circuit may be one single chip, or all or part of the circuits may be integrated as a single chip.

While an LSI is referred to above, depending on the degree of integration, the names Integrated Circuit (IC), system LSI, super LSI, or ultra LSI may be used.

Also, the method of integration is not limited to LSI; a dedicated circuit or general-purpose processor may be used. A Field Programmable Gate Array (FPGA), which is programmable after the LS1 is manufactured, or a reconfigurable processor, which allows reconfiguration of the connection and setting of circuit cells inside the LSI, may be used.

Furthermore, if technology for forming integrated circuits that replaces LSIs emerges, owing to advances in semiconductor technology or to another derivative technology, the integration of functional blocks may naturally be accomplished using such technology. The application of biotechnology or the like is possible.

<Supplementary Explanation 2>

The present Embodiment includes the following aspects.

(1) An OFDM receiver that receives an OFDM modulated signal including a specific symbol, the OFDM receiver comprising a demodulation unit and a combination unit, wherein the specific symbol has a plurality of active carriers assigned discretely in a carrier direction, a first piece of information, which is transmitted using a first set of the active carriers included in a low carrier frequency range, is identical to a second piece of information, which is transmitted using a second set of the active carriers included in a high carrier frequency range, the demodulation unit performs differential demodulation in the carrier direction on the first set of active carriers and the second set of active carriers, and the combination unit weights first differential demodulation results for the first set of active carriers and second differential demodulation results for the second set of active carriers in accordance with (i) a first carrier frequency difference, which is a difference between a $(k - 1)^{th}$ active carrier and a $k^{th}$ active carrier in the first set of active carriers, k being an integer two or greater, and (ii) a second carrier frequency difference, which is a difference between a $(k - 1)^{th}$ active carrier and a $k^{th}$ active carrier in the second set of active carriers, so that differential demodulation results corresponding to a smaller carrier frequency difference are prioritized over differential demodulation results corresponding to a larger carrier frequency difference, and combines the first differential demodulation results with the second differential demodulation results.

(2) The OFDM receiver of claim 1, wherein the combination unit determines weighting coefficients for the first differential demodulation results and for the second differential demodulation results in accordance with an amount of difference between the first carrier frequency difference and the second carrier frequency difference.

(3) The OFDM receiver of claim 2, wherein in addition to the amount of difference between the first carrier frequency difference and the second carrier frequency difference, the combination unit determines weighting coefficients for the first differential demodulation results and for the second differential demodulation results in accordance with a first carrier power for the first set of active carriers and a second carrier power for the second set of active carriers.

(4) The OFDM receiver of claim 1, wherein the composition unit weights the differential demodulation results corresponding to a smaller carrier frequency difference with a weighting coefficient of 100% and the differential demodulation results corresponding to a larger carrier frequency difference with a weighting coefficient of 0%.

(5) The OFDM receiver of claim 1, wherein when the first carrier frequency difference and the second carrier frequency difference are identical, the combination unit weights the first differential demodulation results and the second differential demodulation results in accordance with a first carrier power for the first set of active carriers and a second carrier power for the second set of active carriers, so that differential demodulation results corresponding to a larger carrier power are prioritized over differential demodulation results corresponding to a smaller carrier power.

(6) The OFDM receiver of claim 1, wherein the specific symbol is a P1 symbol in Digital Video Broadcasting - Terrestrial version 2 (DVB-T2) standards, and the first piece of information transmitted using the first set of active carriers and the second piece of information transmitted using the second set of active carriers are an S1 field.

(7) The OFDM receiver of claim 1, wherein the specific symbol is a preamble symbol, and the OFDM receiver further comprises: a tuner that extracts a signal at a predetermined frequency from an OFDM modulated signal received via an antenna; an A/D converter that converts an OFDM modulated signal output by the tuner from analog to digital; a quadrature detector that converts an OFDM modulated signal output by the A/D converter into a desired frequency band; a capture unit that captures a synchronous position of a frame using the preamble symbol; an FFT unit that performs an FFT on an OFDM modulated signal output by the quadrature detector in accordance with information demodulated by the demodulation unit and a synchronous position of a frame captured by the capture unit; an equalization unit that estimates channel characteristics for results output by the FFT unit and equalize the results in accordance with the channel characteristics; an error correction unit that performs error correction on an equalized signal output by the equalization unit; and a decoding unit that decodes a signal, output by the error correction unit, that has undergone error correction.

(8) An OFDM reception method for an OFDM receiver that receives an OFDM modulated signal including a specific symbol, the OFDM reception method comprising the steps of demodulation and combination, wherein the specific symbol has a plurality of active carriers assigned discretely in a carrier direction, a first piece of information, which is transmitted using a first set of the active carriers included in a low carrier frequency range, is identical to a second piece of information, which is transmitted using a second set of the active carriers included in a high carrier frequency range, in the demodulation step, differential demodulation is performed in the carrier direction on the first set of active carriers and the second set of active carriers, and in the combination step, first differential demodulation results for the first set of active carriers and second differential demodulation results for the second set of active carriers are weighted in accordance with (i) a first carrier frequency difference, which is a difference between a $(k - 1)^{th}$ active carrier and a $k^{th}$ active carrier in the first set of active carriers, k being an integer two or greater, and (ii) a second carrier frequency difference, which is a difference between a $(k - 1)^{th}$ active carrier and a $k^{th}$ active carrier in the second set of active carriers, so that differential demodulation results corresponding to a smaller carrier frequency difference are prioritized over differential demodulation results corresponding to a larger carrier frequency difference, and the first differential demodulation results are combined with the second differential demodulation results.

**Industrial Applicability**

The OFDM receiver according to the present invention can be used in a home digital broadcasting receiver, in a digital broadcasting receiver mounted in a moving body such as a vehicle, or in a variety of mobile devices. The digital broadcasting receiver may be of any type, mass, appearance, shape, functionality, etc.

**Reference Signs List**

1    OFDM receiver
2    connector
3    tuner
4    A/D converter
5    quadrature detector
6    preamble symbol capture and demodulation unit
7    FFT unit
8    equalization unit
9    error correction unit
10   decoding unit
11   connector
12   display unit
61   connector
62   preamble symbol capture unit
63   FFT unit
64   carrier information extraction unit
65   descrambler
66   demodulation unit
67   weighting calculation combination unit
68   database storage unit
69   pattern matching unit
70   connector
71   connector
72   demodulation results sorting unit
73   first S1 demodulation results read unit
74   second S1 demodulation results read unit
75   S2 demodulation results read unit
76   connector
77   calculation/combination unit
78   connector
201  antenna unit

**Claims**

**1.**   An OFDM receiver that receives an OFDM modulated signal including a specific symbol, the OFDM receiver comprising a demodulation unit and a combination unit, wherein

the specific symbol has a plurality of active carriers assigned discretely in a carrier direction,

a first piece of information, which is transmitted using a first set of the active carriers included in a low carrier frequency range, is identical to a second piece of information, which is transmitted using a second set of the active carriers included in a high carrier frequency range,

the demodulation unit performs differential demodulation in the carrier direction on the first set of active carriers and the second set of active carriers, and

the combination unit weights first differential demodulation results for the first set of active carriers and second differential demodulation results for the second set of active carriers in accordance with (i) a first carrier frequency difference, which is a difference between a $(k - 1)^{th}$ active carrier and a $k^{th}$ active carrier in the first set of active carriers, k being an integer two or greater, and (ii) a second carrier frequency difference, which is a difference between a $(k - 1)^{th}$ active carrier and a $k^{th}$ active carrier in the second set of active carriers, so that differential demodulation results corresponding to a smaller carrier frequency difference are prioritized over differential demodulation results corresponding to a larger carrier frequency difference, and combines the first differential demodulation results with the second differential demodulation results.

2. The OFDM receiver of claim 1, wherein the combination unit determines weighting coefficients for the first differential demodulation results and for the second differential demodulation results in accordance with an amount of difference between the first carrier frequency difference and the second carrier frequency difference.

3. The OFDM receiver of claim 2, wherein in addition to the amount of difference between the first carrier frequency difference and the second carrier frequency difference, the combination unit determines weighting coefficients for the first differential demodulation results and for the second differential demodulation results in accordance with a first carrier power for the first set of active carriers and a second carrier power for the second set of active carriers.

4. The OFDM receiver of claim 1, wherein the composition unit weights the differential demodulation results corresponding to a smaller carrier frequency difference with a weighting coefficient of 100% and the differential demodulation results corresponding to a larger carrier frequency difference with a weighting coefficient of 0%.

5. The OFDM receiver of claim 1, wherein when the first carrier frequency difference and the second carrier frequency difference are identical, the combination unit weights the first differential demodulation results and the second differential demodulation results in accordance with a first carrier power for the first set of active carriers and a second carrier power for the second set of active carriers, so that differential demodulation results corresponding to a larger carrier power are prioritized over differential demodulation results corresponding to a smaller carrier power.

6. The OFDM receiver of claim 1, wherein

the specific symbol is a P1 symbol in Digital Video Broadcasting - Terrestrial version 2 (DVB-T2) standards, and

the first piece of information transmitted using the first set of active carriers and the second piece of information transmitted using the second set of active carriers are an S1 field.

7. The OFDM receiver of claim 1, wherein

the specific symbol is a preamble symbol, and

the OFDM receiver further comprises:

a tuner that extracts a signal at a predetermined frequency from an OFDM modulated signal received via an antenna;

an A/D converter that converts an OFDM modulated signal output by the tuner from analog to digital;

a quadrature detector that converts an OFDM modulated signal output by the A/D converter into a desired frequency band;

a capture unit that captures a synchronous position of a frame using the preamble symbol;

an FFT unit that performs an FFT on an OFDM modulated signal output by the quadrature detector in accordance with information demodulated by the demodulation unit and a synchronous position of a frame captured by the capture unit;

an equalization unit that estimates channel characteristics for results output by the FFT unit and equalize the results in accordance with the channel characteristics;

an error correction unit that performs error correction on an equalized signal output by the equalization unit; and

a decoding unit that decodes a signal, output by the error correction unit, that has undergone error correction.

8. An OFDM reception method for an OFDM receiver that receives an OFDM modulated signal including a specific symbol, the OFDM reception method comprising the steps of demodulation and combination, wherein
   the specific symbol has a plurality of active carriers assigned discretely in a carrier direction,
   a first piece of information, which is transmitted using a first set of the active carriers included in a low carrier frequency range, is identical to a second piece of information, which is transmitted using a second set of the active carriers included in a high carrier frequency range,
   in the demodulation step, differential demodulation is performed in the carrier direction on the first set of active carriers and the second set of active carriers, and
   in the combination step, first differential demodulation results for the first set of active carriers and second differential demodulation results for the second set of active carriers are weighted in accordance with (i) a first carrier frequency difference, which is a difference between a $(k - 1)^{th}$ active carrier and a $k^{th}$ active carrier in the first set of active carriers, k being an integer two or greater, and (ii) a second carrier frequency difference, which is a difference between a $(k - 1)^{th}$ active carrier and a $k^{th}$ active carrier in the second set of active carriers, so that differential demodulation results corresponding to a smaller carrier frequency difference are prioritized over differential demodulation results corresponding to a larger carrier frequency difference, and the first differential demodulation results are combined with the second differential demodulation results.

FIG. 1

<u>1</u>

EP 2 282 467 A2

FIG. 2

<u>6</u>

EP 2 282 467 A2

FIG. 3

| Carrier assignment number S1 (0) ~ S1 (15) | 44 | 45 | 47 | 51 | 54 | 59 | 62 | 64 | 65 | 66 | 70 | 75 | 78 | 79 | 80 | 81 |
|---|---|---|---|---|---|---|---|---|---|---|---|---|---|---|---|---|
| Carrier interval | – | 1 | 2 | 4 | 3 | 5 | 3 | 2 | 1 | 1 | 3 | 5 | 3 | 1 | 2 | 1 |

| Carrier assignment number S1 (16) ~ S1 (31) | 82 | 84 | 85 | 87 | 88 | 89 | 90 | 94 | 96 | 97 | 98 | 102 | 107 | 110 | 112 | 113 |
|---|---|---|---|---|---|---|---|---|---|---|---|---|---|---|---|---|
| Carrier interval | 1 | 2 | 1 | 2 | 1 | 1 | 1 | 4 | 2 | 1 | 1 | 4 | 5 | 3 | 2 | 1 |

| Carrier assignment number S1 (32) ~ S1 (47) | 114 | 116 | 117 | 119 | 120 | 121 | 122 | 124 | 125 | 127 | 131 | 133 | 135 | 136 | 137 | 138 |
|---|---|---|---|---|---|---|---|---|---|---|---|---|---|---|---|---|
| Carrier interval | 1 | 2 | 1 | 2 | 1 | 1 | 1 | 2 | 1 | 2 | 4 | 2 | 2 | 1 | 1 | 1 |

| Carrier assignment number S1 (48) ~ S1 (63) | 142 | 144 | 145 | 146 | 148 | 149 | 151 | 152 | 153 | 154 | 158 | 160 | 161 | 162 | 166 | 171 |
|---|---|---|---|---|---|---|---|---|---|---|---|---|---|---|---|---|
| Carrier interval | 4 | 2 | 1 | 1 | 2 | 1 | 2 | 1 | 1 | 1 | 4 | 2 | 1 | 1 | 4 | 5 |

EP 2 282 467 A2

**FIG. 4**

| Carrier assignment number S1(320)~S1(332) | 684 | 689 | 692 | 696 | 698 | 699 | 701 | 702 | 703 | 704 | 706 | 707 | 708 |
|---|---|---|---|---|---|---|---|---|---|---|---|---|---|
| Carrier interval | 1 | 5 | 3 | 4 | 2 | 1 | 2 | 1 | 1 | 1 | 2 | 1 | 1 |

| Carrier assignment number S1(333)~S1(345) | 712 | 714 | 715 | 717 | 718 | 719 | 720 | 722 | 723 | 725 | 726 | 727 | 729 |
|---|---|---|---|---|---|---|---|---|---|---|---|---|---|
| Carrier interval | 4 | 2 | 1 | 2 | 1 | 1 | 1 | 2 | 1 | 2 | 1 | 1 | 2 |

| Carrier assignment number S1(346)~S1(358) | 733 | 734 | 735 | 736 | 738 | 739 | 740 | 744 | 746 | 747 | 748 | 753 | 756 |
|---|---|---|---|---|---|---|---|---|---|---|---|---|---|
| Carrier interval | 4 | 1 | 1 | 1 | 2 | 1 | 1 | 4 | 2 | 1 | 1 | 5 | 1 |

| Carrier assignment number S1(359)~S1(371) | 760 | 762 | 763 | 765 | 766 | 767 | 768 | 770 | 771 | 772 | 776 | 778 | 779 |
|---|---|---|---|---|---|---|---|---|---|---|---|---|---|
| Carrier interval | 4 | 2 | 1 | 2 | 1 | 1 | 1 | 2 | 1 | 1 | 4 | 2 | 1 |

| Carrier assignment number S1(372)~S1(383) | 780 | 785 | 788 | 792 | 794 | 795 | 796 | 801 | 805 | 806 | 807 | 809 |
|---|---|---|---|---|---|---|---|---|---|---|---|---|
| Carrier interval | 1 | 5 | 3 | 4 | 2 | 1 | 1 | 5 | 4 | 1 | 1 | 2 |

EP 2 282 467 A2

FIG. 5

67

Read signal from database
storage unit 68

76

73
First S1
demodulation
results read unit

Output from
demodulation unit 66

71
72
Demodulation
results
sorting unit

74
Second S1
demodulation
results read unit

77
Calculation
/combination
unit

Output to pattern
matching unit 69

78

75
S2 demodulation
results read unit

EP 2 282 467 A2

19

FIG. 6

| n | 0 | 1 | 2 | 3 | 4 | 5 | 6 | 7 | ... | 56 | 57 | 58 | 59 | 60 | 61 | 62 | 63 |
|---|---|---|---|---|---|---|---|---|-----|----|----|----|----|----|----|----|----|
| S1(n) | - | 1 | 2 | 4 | 3 | 5 | 3 | 2 | ... | 1 | 1 | 4 | 2 | 1 | 1 | 4 | 5 |
| S1(n+320) | 1 | 5 | 3 | 4 | 2 | 1 | 2 | 1 | ... | 2 | 1 | 1 | 5 | 4 | 1 | 1 | 2 |

20

## FIG. 7

| S1(n+320) carrier interval \ S1(n) carrier interval | 1 | 2 | 3 | 4 | 5 |
|---|---|---|---|---|---|
| 1 | 50%<br>50% | 37.5%<br>62.5% | 25%<br>75% | 12.5%<br>87.5% | 0%<br>100% |
| 2 | 62.5%<br>37.5% | 50%<br>50% | 37.5%<br>62.5% | 25%<br>75% | 12.5%<br>87.5% |
| 3 | 75%<br>25% | 62.5%<br>37.5% | 50%<br>50% | 37.5%<br>62.5% | 25%<br>75% |
| 4 | 87.5%<br>12.5% | 75%<br>25% | 62.5%<br>37.5% | 50%<br>50% | 37.5%<br>62.5% |
| 5 | 100%<br>0% | 87.5%<br>12.5% | 75%<br>25% | 62.5%<br>37.5% | 50%<br>50% |

Top number is weighting for S1(n)
Bottom number is weighting for S1(n+320)

EP 2 282 467 A2

FIG. 8

Carrier numbers with equivalent
difference in carrier interval

FIG. 9A

Carrier power
[dBm]

Frequency [MHz]

FIG. 9B

Carrier power
[dBm]

α                    β

Frequency [MHz]

FIG. 10

| Carrier power [dBm] \ Carrier interval | 1 | 2 | 3 | 4 | 5 |
|---|---|---|---|---|---|
| 0~-15 | 100% | 95% | 90% | 85% | 80% |
| -15~-30 | 85% | 80% | 75% | 70% | 65% |
| -30~-45 | 70% | 65% | 60% | 55% | 50% |
| -45~-60 | 55% | 50% | 45% | 40% | 35% |
| -60~-75 | 40% | 35% | 30% | 25% | 20% |
| -75~-90 | 25% | 20% | 15% | 10% | 5% |

## FIG. 11

<u>100</u>

Preamble format
(S1 field)

Complementary information
(S2 field)

```
                    ┌─101          ┌─102          ┌─103
                    ┌──────────┐   ┌──────────┐   ┌──────────┐
────────────────▶  │Signaling │──▶│Modulation│──▶│Scrambler │
                    │processor │   │  unit    │   │          │
────────────────▶  └──────────┘   └──────────┘   └──────────┘
                                                        │
        ┌─104                          ┌─105    ┌─106         ┌─107
   ┌──────────┐                   ┌──────────┐  ┌──────┐  ┌──────────┐
   │ Carrier  │                   │ Carrier  │  │      │  │  Guard   │
   │assignment│                   │assignment│  │ IFFT │  │ interval │
   │information│─────────────────▶│  unit    │─▶│ unit │─▶│insertion │────▶
   │storage unit│                 │          │  │      │  │  unit    │
   └──────────┘                   └──────────┘  └──────┘  └──────────┘
```

FIG. 12

| S1 scramble signal (front end) | 44 45 47 51 54 59 62 64 65 66 70 75 78 80 81 82 84 85 87 88 89 90<br>94 96 97 98 102 107 110 112 113 114 116 117 119 120 121 122 124<br>125 127 131 132 133 135 136 137 138 142 144 145 146 148 149 151<br>152 153 154 158 160 161 162 166 171 |
|---|---|
| S2 scramble signal | 172 173 175 179 182 187 190 192 193 194 198 203 206 208 209 210<br>212 213 215 216 217 218 222 224 225 226 230 235 238 240 241 242<br>244 245 247 248 249 250 252 253 255 259 260 261 263 264 265 266<br>270 272 273 274 276 277 279 280 281 282 286 288 289 290 294 299<br>300 301 303 307 310 315 318 320 321 322 326 331 334 336 337 338<br>340 341 343 344 345 346 350 352 353 354 358 363 364 365 367 371<br>374 379 382 384 385 386 390 395 396 397 399 403 406 411 412 413<br>415 419 420 421 423 424 425 426 428 429 431 435 438 443 446 448<br>449 450 454 459 462 464 465 466 468 469 471 472 473 474 478 480<br>481 482 486 491 494 496 497 498 500 501 503 504 505 506 508 509<br>511 515 516 517 519 520 521 522 526 528 529 530 532 533 535 536<br>537 538 542 544 545 546 550 555 558 560 561 562 564 565 567 568<br>569 570 572 573 575 579 580 581 583 584 585 586 588 589 591 595<br>598 603 604 605 607 611 612 613 615 616 617 618 622 624 625 626<br>628 629 631 632 633 634 636 637 639 643 644 645 647 648 649 650<br>654 656 657 658 660 661 663 664 665 666 670 672 673 674 678 683 |
| S1 scramble signal (back end) | 684 689 692 696 698 699 701 702 703 704 706 707 708<br>712 714 715 717 718 719 720 722 723 725 726 727 729<br>733 734 735 736 738 739 740 744 746 747 748 753 756<br>760 762 763 765 766 767 768 770 771 772 776 778 779<br>780 785 788 792 794 795 796 801 805 806 807 809 |

EP 2 282 467 A2

FIG. 13

EP 2 282 467 A2

7.61MHz

6.83MHz

Carrier
assignment
number

0

4
4
4

4
5

4
7

4
2
5

4
2
6

8
0
5

8
0
6

8
0
7

8
0
9

8
5
2

S1 scramble signal
(front end)

S2 scramble signal

S1 scramble signal
(back end)

FIG. 14

<u>200</u>

EP 2 282 467 A2

FIG. 15

206

EP 2 282 467 A2